# EUROPÄISCHE PATENTSCHRIFT

(11) **EP 2 707 167 B1**
(45) Veröffentlichungstag und Bekanntmachung des Hinweises auf die Patenterteilung: **22.06.2016**
(21) Anmeldenummer: 12742784.7
(22) Anmeldetag: 07.05.2012
(51) Int. Cl.: B23H 3/00, B23H 7/26, B23Q 1/48, B23H 9/10

(54) **MASCHINE ZUR ELEKTROCHEMISCHEN METALLBEARBEITUNG**
MACHINE FOR ELECTROCHEMICAL METAL MACHINING
MACHINE D'USINAGE ÉLECTROCHIMIQUE DES MÉTAUX

(30) Priorität: 10.05.2011 DE 102011101100
(43) Veröffentlichungstag der Anmeldung: 19.03.2014
(73) Patentinhaber: EMAG Holding GmbH, 73084 Salach (DE)
(72) Erfinder: LAUN, Jochen, 74405 Gaildorf (DE); NOLLER, Alexander, 74405 Gaildorf (DE)
(86) Internationale Anmeldenummer: PCT/DE2012/000472
(87) Internationale Veröffentlichungsnummer: WO 2012/152254

(56) Entgegenhaltungen:
- EP-A2- 1 314 507
- EP-A2- 1 430 983
- DE-B3-102004 040 578
- US-A1- 2004 200 807

## Beschreibung

Die Erfindung betrifft eine Maschine zur elektrocherpischen Metallbearbeitung (ECM). Bei der ECM Bearbeitung wird Metall durch elektrolytische Auflösung abgetragen, bis die gewünschte Werkstückkontur erreicht ist. Dabei sind das Werkstück als Anode (positiv) und das Werkzeug als Kathode (negativ) gepolt oder Spannung, bzw. Strom werden bipolar gepulst. Im Arbeitsspalt zwischen den beiden Elektroden übernimmt eine Elektrolytlösung, z.B. Natriumchlorid oder Natriumnitrat den Ladungstransport. Da der Arbeitsspalt nur Bruchteile von Millimetern misst, müssen Vorschub- und Positioniergenauigkeit höchsten Anforderungen genügen.

Aus der DE 10 2004 040 578 B3 ist eine ECM-Maschine in Portalbauweise bekannt. Bei dieser bekannten Maschine ist am Maschinenbett ein Drehtisch mit einem gabelförmigen Werkstückträger stehend angeordnet. Der Drehtisch ist um eine vertikale Achse drehbar gelagert und der Werkstückträger kann um eine horizontale Achse gedreht werden. Ferner ist auf dem Maschinenbett ein auf vier Säulen gestütztes Portal horizontal verfahrbar. An den Säulen sind zwei durch einen Querträger verbundene Schlitten in vertikaler Richtung beweglich. Der Querbalken ist um eine horizontale Achse schwenkbar gelagert und trägt zwei Werkzeugkathoden, die wiederum gegenüber dem Querträger separat bewegbar sind. insgesamt sind also sieben numerisch gesteuerte Achsen vorgesehen. Die Flexibilität der Maschine wird mit ungewöhnlich langen Wegen für den Kraftfluss erkauft. Die US 4,841,090 A kann als nächstliegender Stand der Technik angesehen werden und offenbart ein etektrochemisches Verfahren zur Herstellung von Blisks. Die Maschine zur Durchführung des Verfahrens ist schematisch stark vereinfacht dargestellt. Das Maschinengestell besteht aus einer Bodenplatte und zwei rechtwinklig zueinander angeordneten vertikalen Wänden. Die Bewegungsachsen sind lediglich als Pfeile angedeutet. Das Werkstück ist um eine B-Achse drehbar und kann in Z-Richtung bewegt werden. Die beiden Werkzeuge in X- und U-Richtung linear beweglich und können um eine C-Achse geschwenkt werden. Die DE 41 15 107 A1 betrifft ein Verfahren und eine Maschine zum elektroerosiven Bearbeiten von Werkstücken. Diese Maschine ist mit fünf linear beweglichen Schlitten und insgesamt acht numerisch gesteuerten Achsen ausgestattet. Dies bedingt zwingend relativ große Abstände zwischen Gestell und Werkzeug bzw. Werkstück. Die Wege für den Kraftfluss sind daher ebenfalls besonders lang. Eine weitere Funkenerosionsmaschine ist aus der DE 199 32 645 C1 bekannt. Das Maschinengestell ist in Monoblockbauweise ausgeführt. An der dem Arbeitsraum zugewandten vorderen senkrechten Fläche ist der Werkstückschlitten in Richtung der X-Achse verfahrbar. Das Werkzeug hier ein Drahtführungskopf ist auf der Oberseite des Monoblocks in Richtung der Y- und Z-Achse beweglich. Schließlich ist aus der DE 33 03 758 A1 eine Funkenerosionsmaschine mit einem Arbeitsbehälter mit verschiebbaren Wandabschnitten bekannt. Die schematische Darstellung der Gesamtmaschine legt die Vermutung nahe, dass das Werkstück ortsfest angeordnet ist und dass der Arbeitskopf sämtliche Bewegungen ausführt. Die beim Erodieren auftretenden Kräfte zwischen Werkstück und Werkzeug sind im Vergleich zur ECM-Bearbeitung gering.

Es ist die Aufgabe der vorliegenden Erfindung eine Werkzeugmaschine nach dem Oberbegriff des Patentanspruchs 1 mit kompakter Bauweise und verbesserter Maschinensteifigkeit anzugeben. Diese Aufgabe wird gelöst mit einer Maschine nach Patentanspruch 1. Vorteilhafte Ausgestaltungen sind den Unteransprüchen entnehmbar

Im Folgenden wird die Erfindung an Hand eines Ausführungsbeispiels näher erläutert.

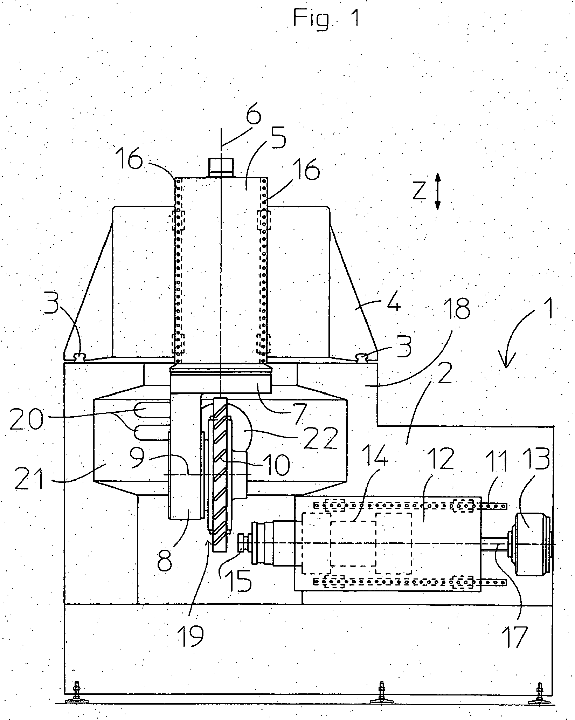

Fig. 1 zeigt die Vorderansicht einer erfindungsgemäßen Werkzeugmaschine in schematischer Darstellung. Das Gestell 1 besteht aus einem massiven Grundkörper aus Reaktionsharzbeton. Dieser ist besonders verwindungssteif und garantiert beste thermische Stabilität. An der vertikalen Vorderwand 2 sind zwei voneinander beabstandete horizontale X-Führungen 11 für den Zustellschlitten 12 vorgesehen. Auf dem Zustellschlitten 12 ist die Oszillatoreinheit 14 mit dem als Kathode negativ gepolten Werkzeug 15 angeordnet. Der Zustellschlitten 12 wird vom Motor 13 über die Rollengewindespindel 17 geregelt zugestellt. Der Zustellbewegung wird über die Oszillatoreinheit 14 ein oszillierender Arbeitshub überlagert, wodurch das Werkzeug 15 mit einer Frequenz in der Größenordnung von 50 Hz parallel zur X-Führüng alternierend bewegt wird. Bei weitem Spaltabstand dringt frischer Elektrolyt in den Arbeitsspalt ein und spült bei erneuter Annäherung die Auflösungsprodukte aus dem Spalt heraus: Für den Arbeitshub sorgt ein Exzenter mit einstellbarem Hub.

An der Oberseite des Gestells 1 ist ein Aufbau 18 mit Y-Führungen 3 für den Horizontalschlitten 4 angeordnet. Der große Abstand der Y-Führungen 3 gewährt höchste Präzision. Am Horizontalschlitten 4 ist die Spindel 5 mit Z-Führungen 16 in vertikaler Richtung verfahrbar angeordnet. An ihrer Unterseite trägt die Spindel 5 das Schwenkteil 7. Daran ist der Lagerbock 8 befestigt, der zusammen mit dem Schwenkteil 7 um die Spindelachse 6 geschwenkt werden kann. Im Lagerbock 8 ist die Werkstückaufnahme 19 für Werkstücke 10 um die Rotationsachse 9 drehantreibbar gelagert. Insgesamt sind für die Bearbeitung der Werkstücke 10 folgende numerisch gesteuerte Achsen realisiert:
X: horizontale Linearachse des Zustellschlittens 12 an der Vorderwand 2
Y: horizontale Linearachse des Horizontalschlittens 4 an der Oberseite des Gestells 1
Z: vertikale Linearachse der Spindel 5 am Horizontalschlitten 4
B: horizontale Drehachse des Werkstücks 10 um die Rotationsachse 9
C: vertikale Drehachse der Spindel 5 um die Spindelachse 6

Besonders vorteilhaft ist im Mittelteil des Gestells 1 von der Vorderwand 2 ausgehend eine Vertiefung 21 für den Arbeitsraum vorgesehen, die nach oben bis in den Aufbau 18 hineinreicht. Da die Spindel 5 mit dem Werkstück 10 zumindest teilweise in die Vertiefung 21 hineinragt, kann der Abstand zwischen Werkzeugeingriff am Werkstück und Gestell deutlich verringert werden. Daraus resultieren ein optimaler Kraftfluss und eine erhöhte Maschinensteifigkeit. Außerdem werden die beiden Seitenwände und die Ober- und Unterseite der Vertiefung 21 zumindest teilweise vom Gestell 1 gebildet. Auch dadurch erhöht sich die Steifigkeit der Maschine. Zudem wird eine besonders kompakte und stabile Bauweise dadurch erreicht, dass die Y- Führungen 3 für die Spindel 5 und die X-Führungen 11 für den Zustellschlitten 12 an zwei zueinander senkrechten Wänden angeordnet sind.

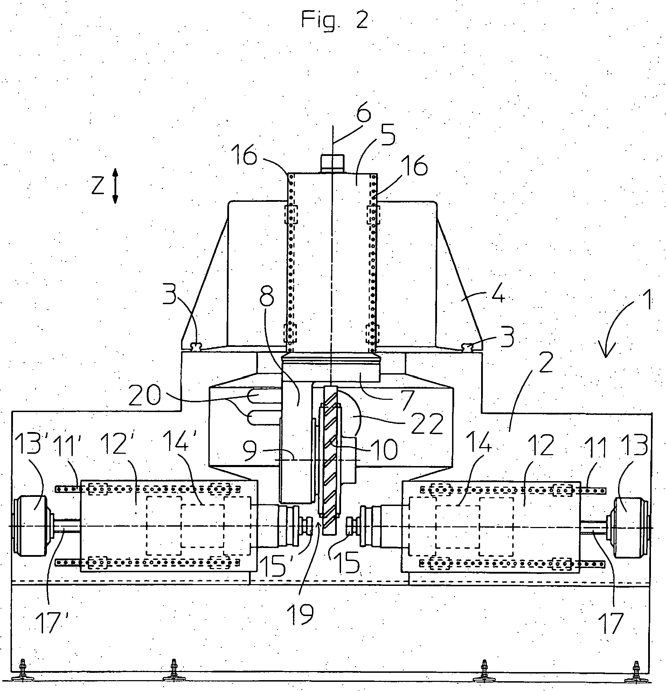

In Fig. 2 ist eine spiegelbildlich aufgebaute Maschine mit zwei Werkzeugen (15, 15') dargestellt. In Analogie zum Zustellschlitten 12 ist ein weiterer Zustellschlitten 12' mit einer Oszillatoreinheit 14' vorgesehen, der auf einer X-Führung 11' am Gestell 1 verfahrbar ist und vom Motor 13' über die Rollengewindespindel 17' bewegt wird. Das synchrone Zustellen der Werkzeuge 15, 15' in entgegengesetzten Richtungen zum Werkstück 10 ist besonders vorteilhaft, weil sich dabei die vom Elektrolyt auf das Werkstück 10 einwirkenden Kräfte gegenseitig aufheben.

### Bezugszeichenliste

1 Gestell
2 Vorderwand
3 Y-Führung
4 Horizontalschlitten
5 Spindel
6 Spindelachse
7 Schwenkteil
8 Lagerbock
9 Rotationsachse
10 Werkstück
11 11'X-Führung
12 12'Zustellschlitten
13 13'Motor
14 14'Oszillatoreinheit
15 15'Werkzeug
16 Z-Führung
17 17' Rollengewindespindel
18 Aufbau
19 Werkstückaufnahme
20 Leitung
21 Vertiefung
22 Öffnung

## Patentansprüche

1. Maschine zur elektrochemischen Metallbearbeitung, wobei Metall durch elektrolytische Auflösung vom Werkstück (10) abgetragen wird, mit einem Gestell (1), mit einer Werkstückaufnahme (19), wobei das Werkstück (10) in der Werkstückaufnahme (19) um eine vertikale Spindelachse (6) und eine horizontale Rotationsachse (9) numerisch gesteuert drehantreibbar gelagert ist, mit mindestens einem dem Werkstück (10) zustellbaren Werkzeug (15), wobei das Werkstück (10) als Anode positiv und das Werkzeug (15) als Kathode negativ gepolt sind, oder wobei bipolar gepulste Spannung bzw. bipolar gepulster Strom an Werkstück (10) und Werkzeug (15) angelegt werden, **dadurch gekennzeichnet, dass** Werkstückaufnahme (19) relativ zum Gestell (1) in horizontaler Richtung auf einem Horizontalschlitten (4) entlang von Y-Führungen (3) und in vertikaler Richtung mit der Spindel (5) entlang der Z-Führung (16) gesteuert beweglich geführt ist und wobei das Werkzeug (15) auf einem Zustellschlitten (12) entlang der X-Führung (11) am Gestell (1) in, horizontaler Richtung bewegbar ist, wobei die X-Führung (11) an der vertikalen Vorderwand (2) und die Y-Führung (3) an der Oberseite des Gestells (1) angeordnet sind.

2. Maschine nach Patentanspruch 1, **dadurch gekennzeichnet, dass** die Y-Führungen (3) auf einem Aufbau (18) angeordnet sind.

3. Maschine nach Patentanspruch 1 oder 2, **dadurch gekennzeichnet, dass** im Gestell (1) von der Vorderwand (2) ausgehend eine Vertiefung (21) für den Arbeitsraum vorgesehen ist und dass die Spindel (5) mit dem Werkstück (10) zumindest teilweise in die Vertiefung (21) hineinragt.

4. Maschine nach Patentanspruch 3, **dadurch gekennzeichnet, dass** die beiden Seitenwände und die Ober- und Unterseite der Vertiefung (21) zumindest teilweise vom Gestell (1) gebildet werden.

5. Maschine nach Patentanspruch 4, **dadurch gekennzeichnet, dass** in der Rückwand der Vertiefung (21) eine Öffnung (22) für die Leitungen (20) und Energiezuführung zur Werkstückaufnahme (19) vorgesehen ist.

6. Maschine nach einem der Patentansprüche 1 bis 6, **dadurch gekennzeichnet, dass** zwei Werkzeuge (15,15') spiegelbildlich zum Werkstück (10) angeordnet sind.

7. Maschine nach Patentanspruch 6, **dadurch gekennzeichnet, dass** die Werkzeuge (15, 15') über die Maschinensteuerung synchron und in entgegengesetzter Richtung dem Werkstück (10) zustellbar sind.

## Claims

1. Machine for electrochemical metal machining, wherein metal is removed from the workpiece (10) by electrolytic dissolution, comprising a frame (1), with a work holder (19), wherein the workpiece (10) is mounted in the work holder (19) in such a way that it can be rotationally driven under numerical control about a vertical spindle axis (6) and a horizontal axis of rotation (9), with at least one tool (15), which can be infed to the workpiece (10), wherein the workpiece (10) is positively poled as an anode and the tool (15) is negatively poled as a cathode, and wherein bipolar pulsed voltage and bipolar pulsed current are applied to the workpiece (10) and the tool (15), **characterized in that** the work holder (19) is guided movably in a controlled manner in relation to the frame (1) in a horizontal direction on a horizontal slide (4) along Y guides (3) and in a vertical direction with the spindle (5) along the Z guide (16), and wherein the tool (15) can be moved in a horizontal direction on an infeed slide (12) along the X guide (11) on the frame (1), wherein the X guide (11) is arranged on the vertical front wall (2) and the Y guide is arranged on the upper side of the frame (1).

2. Machine according to Patent Claim 1, **characterized in that** the Y guides (3) are arranged on a structure (18).

3. Machine according to Patent Claim 1 or 2, **characterized in that** a depression (21) for the working space is provided in the frame (1), extending from the front wall (2), and **in that** the spindle (5) with the workpiece (10) protrudes at least partially into the depression (21).

4. Machine according to Patent Claim 3, **characterized in that** the two side walls and the upper side and the underside of the depression (21) are at least partially formed by the frame (1).

5. Machine according to Patent Claim 4, **characterized in that** an opening (22) for the lines (20) and for supplying energy to the work holder (19) is provided in the rear wall of the depression (21).

6. Machine according to one of Patent Claims 1 to 6, **characterized in that** two tools (15, 15') are arranged mirror-symmetrically with respect to the workpiece (10).

7. Machine according to Patent Claim 6, **characterized in that** the tools (15, 15') can be infed to the workpiece (10) synchronously and in opposite directions by means of the machine control.

## Revendications

1. Machine d'usinage électrochimique des métaux, du métal étant enlevé de la pièce (10) par dissolution électrolytique, comprenant un bâti (1) avec un porte-pièce (19), la pièce (10) étant supportée dans le porte-pièce (19) de manière à pouvoir être entraînée en rotation par commande numérique autour d'un axe de broche vertical (6) et autour d'un axe de rotation horizontal (9), comprenant au moins un outil (15) pouvant être approché de la pièce (10), la pièce (10) en tant qu'anode étant polarisée positivement et l'outil (15) en tant que cathode étant polarisé négativement, ou une tension à impulsion bipolaire ou un courant à impulsion bipolaire étant appliqués à la pièce (10) et à l'outil (15), **caractérisée en ce que** le porte-pièce (19) est guidé de manière déplaçable de manière commandée par rapport au bâti (1) dans la direction horizontale sur un chariot horizontal (4) le long de guides Y (3) et dans la direction verticale avec la broche (5) le long du guide Z (16) et l'outil (15) pouvant être déplacé dans la direction horizontale sur un chariot d'avance (12) le long du guide X (11) sur le bâti (1),
le guide X (11) étant disposé sur la paroi avant verticale (2) et le guide Y (3) étant disposé sur le côté supérieur du bâti (1).

2. Machine selon la revendication 1, **caractérisée en ce que** les guides Y (3) sont disposés sur une structure (18).

3. Machine selon la revendication 1 ou 2, **caractérisée en ce qu'**un renfoncement (21) pour l'espace de travail est prévu dans le bâti (1) à partir de la paroi avant (2) et **en ce que** la broche (5) pénètre au moins en partie dans le renfoncement (21) avec la pièce (10).

4. Machine selon la revendication 3, **caractérisée en ce que** les deux parois latérales et le côté supérieur et le côté inférieur du renfoncement (21) sont formés au moins en partie par le bâti (1).

5. Machine selon la revendication 4, **caractérisée en ce qu'**une ouverture (22) pour les lignes (20) et l'alimentation en puissance du porte-pièce (19) est prévue dans la paroi arrière du renfoncement (21).

6. Machine selon l'une quelconque des revendications 1 à 6, **caractérisée en ce que** deux outils (15, 15') sont disposés avec une symétrie spéculaire par rapport à la pièce (10).

7. Machine selon la revendication 6, **caractérisée en ce que** les outils (15, 15') peuvent être avancés vers la pièce (10) par le biais de la commande de machine de manière synchronisée et dans une direction opposée.
